# EUROPÄISCHE PATENTSCHRIFT

(11) **EP 2 857 271 B1**
(45) Veröffentlichungstag und Bekanntmachung des Hinweises auf die Patenterteilung: **01.09.2021**
(21) Anmeldenummer: 14002505.7
(22) Anmeldetag: 18.07.2014
(51) Int. Cl.: B60W 20/00, B60W 50/00, B60W 10/06, B60W 10/08, B60K 6/46

(54) **BETRIEBSVERFAHREN FÜR EINEN HYBRIDANTRIEB, INSBESONDERE ZUR AUSWAHL OPTIMALER BETRIEBSMODI DES HYBRIDANTRIEBS ENTLANG EINER FAHRTROUTE**
OPERATING METHOD FOR A HYBRID DRIVE, IN PARTICULA FOR SELECTING OPTIMAL OPERATING MODES OF THE HYBRID DRIVE ALONG A TRAVEL ROUTE
PROCÉDÉ DE FONCTIONNEMENT D'UN ENTRAÎNEMENT HYBRIDE, NOTAMMENT POUR LA SÉLÉCTION DE MODES DE FONCTIONNEMENT OPTIMAUX DE L'ENTRAÎNEMENT HYBRIDE LE LONG D'UN TRAJET

(30) Priorität: 04.10.2013 DE 102013016569
(43) Veröffentlichungstag der Anmeldung: 08.04.2015
(73) Patentinhaber: MAN Truck & Bus SE, 80995 München (DE)
(72) Erfinder: Geser, Andreas, 81369 München (DE); Kerschl, Stefan, 85402 Kranzberg (DE); von Esebeck, Götz, 15831 Mahlow (DE)
(74) Vertreter: v. Bezold & Partner Patentanwälte - PartG mbB

(56) Entgegenhaltungen:
- WO-A1-2013/110709
- DE-A1-102008 015 046
- DE-A1-102011 075 226

## Beschreibung

Die Erfindung betrifft ein Betriebsverfahren für einen Hybridantrieb eines Kraftfahrzeugs, insbesondere eines Plug-In-Hybrid- oder Range-Extender-Fahrzeugs, der mit mehreren Betriebsmodi betrieben werden kann. Die Erfindung betrifft insbesondere ein Betriebsverfahren zur Auswahl optimaler Betriebsmodi des Hybridantriebs entlang einer Fahrtroute.

Derzeit werden verstärkt sogenannte Plug-In-Hybrid- und Range-Extender-Fahrzeuge entwickelt. Diese Fahrzeuge besitzen mindestens zwei Energiewandler, häufig einen Verbrennungsmotor und eine elektrische Maschine (E-Maschine), sowie zwei Energiespeicher, häufig einen Kraftstofftank und einen Energiespeicher für elektrische Energie, wie beispielsweise eine Batterie. Der Energiespeicher für elektrische Energie kann extern, z. B. über das Stromnetz, geladen werden. Derartige Fahrzeuge können längere Strecken rein elektrisch oder hybridisch fahren bzw. in verschiedenen Fahrmodi betrieben werden. Typische Fahrmodi sind der rein elektrische Betrieb, bei welchem die Traktionsenergie ausschließlich durch die Batterie bereitgestellt und durch die E-Maschine gewandelt wird. Ein weiterer Betriebsmodus ist der Hybridbetrieb, bei dem das Fahrzeug hauptsächlich durch den Verbrennungsmotor, versorgt durch den Kraftstofftank, betrieben wird und der Elektromotor und die Batterie der Effizienzsteigerung durch verschiedene Hybridfunktionen, wie beispielsweise Rekuperation, Lastpunktverschiebung, etc., dienen. Ein weiterer möglicher Betriebsmodus ist beispielsweise das Laden der Batterie über den Verbrennungsmotor.

Eine Schwierigkeit besteht darin, die Fahrmodi im Fahrbetrieb so zu wählen, dass über die gesamte Fahrstrecke hinweg ein möglichst optimaler Fahrbetrieb ermöglicht wird. Ein möglichst optimaler Fahrbetrieb kann derjenige sein, der beispielsweise minimale Fahrtkosten erzeugt, der den CO2-Ausstoß minimiert und/oder der ein möglichst langes elektrisches Fahren bzw. ein elektrisches Fahren in bestimmten Bereichen, z. B. in Innenstädten, ermöglicht. Üblicherweise wird der Fahrer die Betriebsmodi nicht optimal wählen können, um solche übergeordneten Ziele zu erreichen, da ihm die notwendigen Informationen nicht zur Verfügung stehen bzw. diese für ihn zu komplex zu verarbeiten wären.

Aus der DE 198 31 487 C1 ist ein Verfahren zum Betrieb eines seriellen Hybridantriebs bekannt, das kurz-, mittel- und längerfristige Einflüsse von Verkehrsinformationen auf die Betriebsstrategie berücksichtigt, um den Betriebsmodus des Hybridfahrzeugs zu optimieren. Es wird vorgeschlagen, auf Basis eines Leistungsprofils für einzelne Teilstrecken eine bevorzugte Antriebsart bzw. Energiequelle zu ermitteln. Nachteilig an dem beschriebenen Verfahren ist jedoch, dass diese isolierte Betrachtungsweise von Teilstrecken nicht ermöglicht, für den Gesamtverlauf einer Fahrtroute die optimale Abfolge von Betriebsmodi zu bestimmen, da die Antriebsart mit dem scheinbar besten Leistungsprofil für eine bestimmte Teilstrecke unter Berücksichtigung des Gesamtverlaufs der Fahrtstrecke nicht zwangsläufig die optimale Wahl für diese Teilstrecke darstellt.

Aus den Offenlegungsschriften DE 10 2011 075 226 A1 und DE 10 2008 015 046 A1 sind Betriebsverfahren für einen Hybridantrieb eines Fahrzeugs bekannt, wobei zur Ermittlung einer Zielgröße eine Fahrtroute in eine Abfolge von Streckenabschnitten aufgeteilt wird, um die unterschiedlichen Betriebsmodi des Fahrzeugs für die einzelnen Streckenabschnitte zu bestimmen. Aus der WO 2013/110709 A1 ist ebenfalls ein entsprechendes Verfahren bekannt.

Eine Aufgabe der Erfindung ist es, ein Betriebsverfahren für einen Hybridantrieb eines Kraftfahrzeugs, der mit mehreren Betriebsmodi betrieben werden kann, bereitzustellen, das Nachteile herkömmlicher Betriebsverfahren vermeidet. Das Betriebsverfahren soll insbesondere eine Auswahl optimaler Betriebsmodi des Hybridantriebs entlang einer Fahrtroute ermöglichen.

Diese Aufgaben werden jeweils durch ein Betriebsverfahren für einen Hybridantrieb mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert. Erfindungsgemäß wird ein Betriebsverfahren für einen Hybridantrieb eines Kraftfahrzeuges, der mit mehreren Betriebsmodi zum Vorwärtstreiben des Fahrzeugs betrieben werden kann, vorgeschlagen. Eine besonders hervorgehobene Anwendung des erfindungsgemäßen Betriebsverfahrens betrifft den Hybridantrieb eines Plug-In-Hybrid- oder Range-Extender-Fahrzeugs, wobei das erfindungsgemäße Verfahren jedoch nicht auf diese Arten von Hybridfahrzeugen beschränkt ist, sondern auf jede Art von Hybridfahrzeug anwendbar ist, die mit mehreren Betriebsmodi betrieben werden können.

Das Verfahren umfasst die folgenden Schritte: Aufteilen einer Fahrtroute in eine Abfolge von Streckenabschnitten; Bestimmen wenigstens einer prädizierten Zielgröße für jeden der mehreren Betriebsmodi des Hybridantriebs auf jedem Streckenabschnitt entlang der Fahrtroute; und Bestimmen eines optimalen Pfades für die Fahrtroute.

Hierbei wird unter einem Pfad eine Abfolge von Betriebsmodi entlang der Fahrtroute verstanden, derart, dass jedem Streckenabschnitt einer der mehreren Betriebsmodi zugeordnet ist. Mit anderen Worten gibt ein Pfad an, welche Betriebsmodi, z. B. rein elektrisches Fahren, Hybridbetrieb oder Aufladen der Batterie mittels des Verbrennungsmotor, nacheinander entlang der Fahrtroute zum Einsatz kommen. Der optimale Pfad ist derjenige, der einen optimalen Wert für die mindestens eine Zielgröße aufweist. Zur Bestimmung des Werts der Zielgröße eines Pfades, insbesondere des optimalen Pfades, werden vorzugsweise die Einzelwerte der Zielgröße für alle Streckenabschnitte entlang eines Pfades summiert. Bei Vergleich aller Pfade bezüglich der Zielgröße weist derjenige Pfade den optimalen Wert für die Zielgröße auf, der einen Maximal- oder Minimalwert für die Zielgröße aufweist.

Der erfindungsgemäße Ansatz, eine vorgegebene Fahrtroute in unterschiedliche Pfade zu zerlegen, derart, dass alle möglichen Abfolgen von Betriebsmodi, um vom Start zum Ziel entlang der Fahrtroute zu gelangen, berücksichtigt werden, ermöglicht es, unter Berücksichtigung des Gesamtverlaufs der Fahrtroute, die für die vorgegebene Zielgröße bestmögliche Abfolge von Betriebsmodi zu bestimmen.

Hierbei kann durch Vorgabe einer gewünschten Zielgröße die Bestimmung der optimalen Betriebsmodi entlang der Fahrtroute an das gewünschte Optimierungsziel angepasst werden. Ein bevorzugtes Beispiel für eine Zielgröße sind die Fahrtkosten, wobei der optimale Pfad dann derjenige ist, dessen Abfolge von Betriebsmodi die geringsten Fahrtkosten für die Fahrtroute zur Folge hat. Gemäß diesem Ausführungsbeispiel werden die voraussichtlichen Fahrtkosten für jeden Betriebsmodus auf jedem Streckenabschnitt entlang der Fahrtroute berechnet, d.h. prädiziert. So kann für jeden möglichen Pfad, d.h. Abfolge von Betriebsmodi entlang der Fahrtstrecke, eine Gesamtfahrtkostengröße berechnet werden bzw. unter allen möglichen Pfaden derjenige ausgewählt werden, über den das Fahrzeug kostenoptimiert zum Ziel gelangt. Die für diese Zielgröße benötigten aktuellen Strompreise pro Kilowattstunde und Kraftstoffpreise pro Liter werden vorab bereitgestellt bzw. bei Bedarf aktualisiert, z. B. durch Eingabe in ein entsprechend ausgeführtes Navigationssystem durch einen Nutzer oder automatisiert per Fernabfrage der Daten, die durch einen Server bereitgestellt werden.

Mit der vorliegenden Erfindung ist es jedoch auch möglich, durch Vorgabe einer anderen Zielgröße die Auswahl der verschiedenen Betriebsmodi entlang der Fahrtroute nach anderen Kriterien zu optimieren. Gemäß einer weiteren Variante können als Zielgröße die Fahrzeugemissionen, insbesondere die CO2-Emissionen, vorgeben und demzufolge optimiert werden. Weitere mögliche Zielgrößen sind die Lebensdauerbeanspruchung der Batterie und/oder eine Zeitdauer, die elektrisch entlang der Route gefahren wird. Letztere ist ein Beispiel für eine Zielgröße, bei der der optimale Pfade derjenige ist, der einen Maximalwert für die Zielgröße aufweist.

Gemäß einer besonders bevorzugten Ausführungsform ist die Zielgröße eine multidimensionale Zielgröße, d.h., es werden die voraussichtlichen Werte für jeweils mehrere verschiedene Zielgrößen für jeden der Betriebsmodi des Hybridantriebs und auf jedem Streckenabschnitt entlang der Fahrtroute bestimmt. Gemäß diesem Ausführungsbeispiel wird der optimale Pfad dann mittels einer multikriteriellen Optimierung (Pareto-Optimierung) auf Basis der mehreren Zielgrößen bestimmt. Mit anderen Worten können mehrere Teilziele definiert werden, beispielsweise die Optimierung der Fahrtkosten, die Optimierung der CO2-Emissionen und die Minimierung der Lebensdauerbeanspruchung der Batterie, und mittels Gewichtungsfaktoren zu einer gemeinsamen Zielfunktion zusammengefasst werden, die dann mittels gängiger Pareto-Optimierungstechniken zur Lösung des multikriteriellen Pfadoptimierungsproblems optimiert wird.

Erfindungsgemäß erfolgt die Bestimmung der einen Zielgröße oder der mehreren Zielgrößen in Abhängigkeit von verbrauchsrelevanten Größen. Zur Verbesserung der Vorhersagegenauigkeit können diese ebenfalls für die einzelnen Streckenabschnitte prädiziert werden.

Beispielsweise kann die Bestimmung einer Zielgröße in Abhängigkeit eines Fahrgeschwindigkeitsverlaufs entlang der Fahrtroute erfolgen, da der Energieverbrauch bzw. die vorgenannten Zielgrößen für die jeweiligen Antriebsarten maßgeblich von der Fahrgeschwindigkeit entlang der Route abhängen. Der Fahrgeschwindigkeitsverlauf kann in Abhängigkeit eines Streckentyps, einer Geschwindigkeitsbegrenzung entlang einem Routenabschnitt und/oder in Abhängigkeit eines topographischen Verlaufs, beispielsweise der Steigung oder des Gefälles eines Routenabschnitts, vorhergesagt werden. Gemäß dieser Ausführungsvariante bestimmt das Betriebsverfahren die voraussichtliche Fahrgeschwindigkeit des Fahrzeugs in jedem Streckenabschnitt.

Eine weitere Möglichkeit der erfindungsgemäßen Realisierung sieht vor, unter Verwendung von aktuellen oder historischen Verkehrsdaten zusätzlich die erwartete Geschwindigkeit eines Verkehrsflusses in den einzelnen Streckenabschnitten zu berücksichtigen, um die Vorhersage des Fahrgeschwindigkeitsverlaufs entlang der Fahrtroute weiter zu verbessern. Ansätze zur Bestimmung der voraussichtlichen Fahrtgeschwindigkeit in einem Streckenabschnitt entlang einer vorgegebenen Fahrtroute, wie vorstehend beschrieben, sind aus dem Stand der Technik der Navigationsvorrichtungen bekannt und müssen hier nicht weiter beschrieben werden.

Erfindungsgemäß werden weitere fahrzeugspezifische und/oder fahrzeugumgebungsspezifische Größen, die Einfluss auf die Zielgrößen haben, berücksichtigt, nämlich die Fahrzeugmasse, eine Temperatur des Antriebstranges, eine Temperatur der Batterie, eine Außentemperatur und/oder eine Innenraumtemperatur. So kann beispielsweise abhängig von der Außen- und der Innentemperatur im Fahrzeug der Energiebedarf für die Heizung und Klimaanlage oder weiterer Nebenverbraucher bestimmt werden. Der entlang der Fahrtroute voraussichtlich erforderliche Energieverbrauch der Nebenverbraucher stünde somit nicht mehr als Energie für die elektrische Maschine zum Vorwärtstreiben des Fahrzeugs zur Verfügung. Gemäß dieser Ausführungsvarianten werden somit derartige fahrzeugspezifische und/oder fahrzeugumgebungsspezifische Größen für die einzelnen Streckenabschnitte prädiziert, d.h. vorhergesagt. Dadurch kann die Genauigkeit der Bestimmung der optimalen Betriebsmodi weiter verbessert werden.

Gemäß einer bevorzugten Ausgestaltungsform erfolgt die Bestimmung der wenigstens einen Zielgröße in Abhängigkeit von wenigstens einer Zwangsbedingung. So kann beispielsweise ein bestimmter Betriebsmodus für einen oder mehrere Streckenabschnitte vorgegeben werden, beispielsweise falls ein Bereich entlang der Fahrtroute durchfahren wird, in dem elektrisch gefahren werden muss (sogenannte "Zero-Emission-Zone"). Gemäß einer weiteren vorteilhaften Variante dieser Ausführungsform kann auch ein bestimmter Schwellwert, den ein Batterieladezustand am Ende der Fahrtroute unterschreiten soll, vorgegeben werden. Dadurch kann beispielsweise sichergestellt werden, dass die Batterie während der Fahrt genügend entladen wird, um diese nach der Fahrt mit regenerativem Strom wieder aufladen zu können bzw. um die Alterung der Batterie positiv zu beeinflussen. Alternativ kann auch ein bestimmter Schwellwert, den ein Batterieladezustand am Ende der Fahrtroute überschreiten soll, vorgegeben werden. Dadurch kann ein elektrischer Betrieb bei Wiederaufnahme der Fahrt gewährleistet werden, wenn am Ziel der Fahrtroute keine Ladestelle vorhanden ist und sich das Ziel in einer Zero-Emission-Zone befindet.

Eine weitere vorteilhafte Ausgestaltungsform sieht vor, dass die Bestimmung der wenigstens einen Zielgröße in Abhängigkeit von externen Lademöglichkeiten für die Batterien entlang der Fahrtroute erfolgt. Bei einer vorteilhaften Variante dieser Ausgestaltungsform werden Haltepunkte entlang der optimalen Route zum Einkoppeln von regenerativem Strom ermittelt und dem Fahrer vorgeschlagen.

Um die Genauigkeit der Bestimmung der optimalen Abfolge von Betriebsmodi weiter zu verbessern, ist es vorteilhaft, nach erfolgter Durchfahrt eines Streckenabschnitts oder von mehreren Streckenabschnitten die prädizierte wenigstens eine Zielgröße durch den tatsächlichen Wert (Ist-Wert) für die wenigstens eine Zielgröße für die bereits durchfahrenen Streckenabschnitte zu ersetzen und die Bestimmung des optimalen Pfades erneut durchzuführen. Gemäß dieser Variante können die prädizierten verbrauchsrelevanten Größen für die bereits durchfahrenen Streckenabschnitte durch die tatsächlichen Werte (Ist-Werte) für diese Größen ersetzt werden, um die tatsächlichen Werte der Zielgröße zu berechnen.

Ein weiterer Aspekt der Erfindung betrifft ein Fahrzeug, insbesondere ein Nutzfahrzeug, mit einem Hybridantrieb, der mit einem Verfahren gemäß der vorstehend beschriebenen Aspekte betrieben wird.

Weitere Einzelheiten und Vorteile der Erfindung werden im Folgenden unter Bezug auf die beigefügten Zeichnungen beschrieben. Es zeigen:
- Figur 1: ein Ablaufdiagramm eines Betriebsverfahrens zur Auswahl optimaler Betriebsmodi des Hybridantriebs gemäß einem Ausführungsbeispiel;
- Figur 2: schematisch die Aufteilung der Strecke in Streckenabschnitte und die Berechnung der Zielgröße je Streckenabschnitt für einzelne Pfade;
- Figur 3: die Berechnung prädizierter Zielgrößen und Verbrauchsgrößen unter Verwendung von Kennfeldern; und
- Figur 4: schematisch die Auswahl eines optimalen Pfades zur Bestimmung einer optimalen Abfolge von Betriebsmodi.

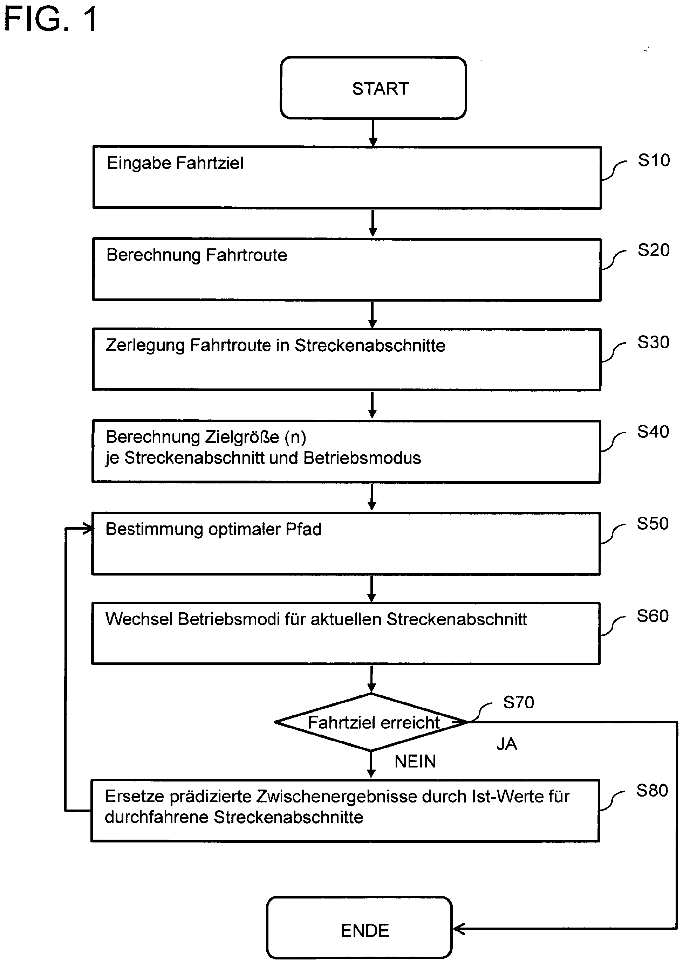

Figur 1 beschreibt beispielhaft ein mögliches Ablaufdiagramm für ein Betriebsverfahren eines Hybridantriebs eines Kraftfahrzeugs zur Auswahl optimaler Betriebsmodi entlang einer Fahrtroute.

Im Schritt S10 erfolgt die Vorgabe des Fahrtziels, z. B. mittels einer Nutzereingabe in eine Navigationsvorrichtung.

Anschließend wird im Schritt S20 die Fahrtroute in herkömmlicher Weise mittels einer aus dem Stand der Technik bekannten Navigationsvorrichtung berechnet.

Im Schritt S30 erfolgt eine Zerlegung der berechneten Fahrtroute in einzelne Streckenabschnitte. Die Länge der einzelnen Streckenabschnitte ist prinzipiell frei wählbar und wird vorteilhafterweise in Abhängigkeit der Route automatisch gewählt. Die Zerlegung erfolgt hierbei beispielsweise nach Kriterien, die Streckenabschnitte mit ähnlichen Anforderungen bilden. Eine Möglichkeit ist, die Fahrtroute nach den Streckentypen entlang der Route aufzuteilen, d.h. nach Autobahnen, Überlandstraßen, innerstädtischen Straßen etc., so dass ein Streckenabschnitt beispielsweise dann beginnt bzw. endet, wenn ein Straßentyp anfängt bzw. endet. Alternativ oder zusätzlich kann eine Zerlegung in Streckenabschnitte mit unterschiedlicher vorgeschriebener Höchstgeschwindigkeit entlang der Fahrtroute gewählt werden. Derartige Informationen sind den gängigen in Navigationsgeräten verwendeten Kartendaten entnehmbar. Vorteilhafterweise werden weitere Kriterien bei der Zerlegung der Fahrtroute in Streckenabschnitte berücksichtigt, wie beispielsweise das Vorhandensein von Umweltzonen oder Zero-Emission-Zonen, so dass die Vorgabe von Zwangsbedingungen, die einen bestimmten Betriebsmodus erfordern, erleichtert wird.

Grundsätzlich ist festzustellen, dass sich die Berechnungsgenauigkeit und erforderliche Rechenzeit erhöht, je kürzer die Einzelstreckenabschnitte entlang der Fahrtroute gewählt werden, so dass sich die Aufteilung in einzelne Streckenabschnitte letztendlich als Kompromiss aus Rechenzeit und Vorhersagegenauigkeit darstellt.

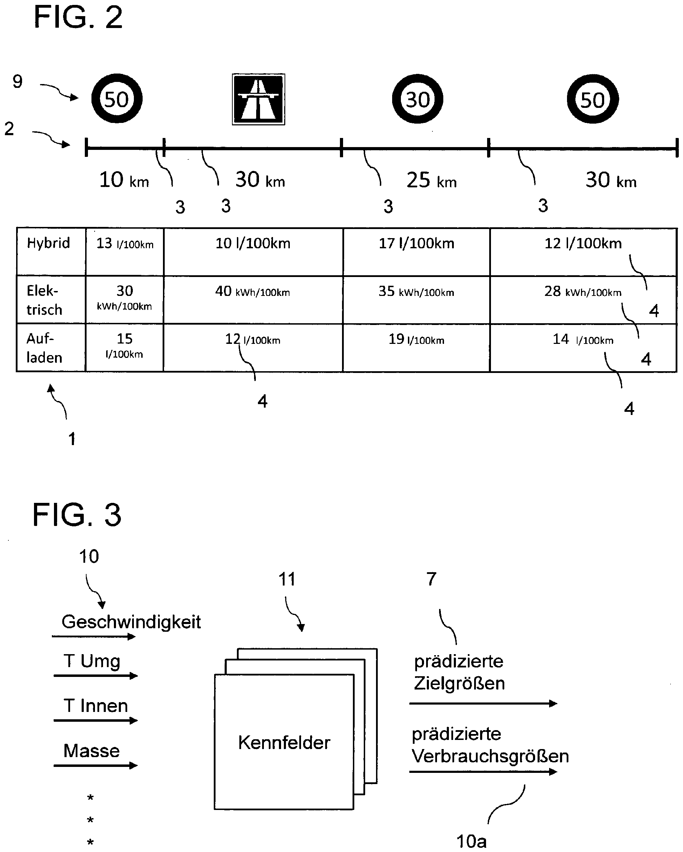

Die Aufteilung in einzelne Streckenabschnitte ist in dem oberen Abschnitt der Figur 2 illustriert. In der stark vereinfachten Darstellung ist eine Fahrtroute 2 lediglich in vier einzelne Streckenabschnitte 3 mit variabler Länge unterteilt, wobei in jedem Streckenabschnitt 3 eine unterschiedliche Geschwindigkeitsbegrenzung 9 gilt.

Nach der Zerlegung der Fahrtroute 2 in einzelne Streckenabschnitte 3 erfolgt im Schritt S40 der Figur 1 die Bestimmung der Zielgröße(n) je Streckenabschnitt und Betriebsmodus. Dies ist im unteren Abschnitt der Figur 2 illustriert.

Die Hybridantriebseinheit hat verschiedene , hier im Beispiel in bekannter Weise drei wählbare Betriebsmodi 1 zum Vorwärtstreiben des Fahrzeugs: einen ersten Hybrid-Modus, bei dem das Fahrzeug hauptsächlich durch den Verbrennungsmotor, versorgt durch den Kraftstofftank, betrieben wird und der Elektromotor und die Batterie der Effizienzsteigerung durch verschiedene Hybridfunktionen, wie beispielsweise Rekuperation, Lastpunktverschiebung, etc., dienen; einen zweiten rein elektrischen Modus, bei welchem die Traktionsenergie ausschließlich durch die Batterie bereitgestellt und durch die E-Maschine gewandelt wird; und einen "Auflade"-Modus, in dem die Batterie über den Verbrennungsmotor geladen wird.

Im vorliegenden Ausführungsbeispiel werden als Zielgröße die Fahrkosten optimiert. Die Fahrtkosten pro Streckenabschnitt ergeben sich aus dem Energieverbrauch 4 pro Streckenabschnitt 3 multipliziert mit dem Preis pro Energieeinheit. In der vereinfachten Darstellung der Figur 2 ist nur der Energieverbrauch in l/km bzw. kWh/100km als Zwischenergebnis dargestellt.

Die beispielhaft in der Tabelle der Figur 2 gezeigten Werte machen deutlich, dass sich die prädizierten Energieverbrauchswerte in der Regel nicht nur für jeden Betriebsmodus unterscheiden, sondern auch für einen vorgegebenen Betriebsmodus für jeden Streckenabschnitt vorhergesagt werden. Dabei ist der erwartete Energieverbrauch 4 nicht nur von dem erwarteten Geschwindigkeitsverlauf 9 innerhalb jedes Streckenabschnitts 3 abhängig, sondern zusätzlich von weiteren Einflussfaktoren. Vorzugsweise werden daher weitere verbrauchsrelevante Eingabegrößen berücksichtigt, um die Genauigkeit zu erhöhen. Diese umfassen beispielsweise verschiedene Streckendaten, wie beispielsweise den Streckentyp (Autobahn, Landstraße, etc.) oder topographische Daten der Strecke wie beispielsweise Steigungen und Gefälle. Zusätzlich können noch Informationen zur Geschwindigkeit des Verkehrsflusses berücksichtigt werden. Ferner können fahrzeugspezifische oder fahrzeugumgebungsspezifische Größen bei der Berechnung der Zielgröße(n) berücksichtigt werden. Die umfassen beispielsweise die Fahrzeugmasse, die Außentemperatur, die Innentemperatur, die Temperatur des Antriebsstrangs und der Batterie, die Stirnfläche und den Luftwiderstandsbeiwert.

Hierbei erfolgt, wie in Figur 3 schematisch dargestellt, die Bestimmung der Zielgröße(n) 7 anhand von hinterlegten Kennwerten, -linien oder auch -feldern 11, mittels derer für jeden Betriebsmodus 1 den verbrauchsrelevanten Größen 10, z. B. den Streckendaten, den fahrzeugspezifischen und fahrzeugumgebungsspezifischen Größe(n), ein entsprechender Wert der Zielgröße zugeordnet wird. Gemäß einem einfachen Beispiel könnten derartige Kennfelder typische Energieverbrauchswerte für bestimmte Streckenabschnitte enthalten, eine Fahrt in einer Tempo-30-Zone mit einem Fahrzeug der Masse xx z. B. entspricht yy kWh/100km im rein elektrischen Betrieb oder zz l/100km im Hybridbetrieb.

Abhängig von den gemäß der jeweiligen Ausführungsform des erfindungsgemäßen Betriebsverfahrens verwendeten Zielgrößen 4 wird vorab festgelegt, welche spezifischen verbrauchsrelevanten Größen 10 für die Berechnung der prädizierten Zielgrößen 7 verwendet werden. Der funktionale Zusammenhang zwischen diesen verbrauchsrelevanten Größen 10 und den zu bestimmenden Zielgrößen 7 wird dann anhand entsprechender Kennwerten/ - linien/-feldern 11, die beispielsweise vorab experimentell bestimmt wurden, in einem Fahrzeugspeicher hinterlegt.

Wie in Figur 3 ferner illustriert ist, können in einem Zwischenschritt weitere verbrauchsrelevanten Größen 10a, die für die Vorhersage der Zielgröße(n) 7 je Streckenabschnitt und je Betriebsmodus 1 verwendet werden, ebenfalls mittels entsprechender Kennwerten/-linien/- felder 11 prädiziert werden. Diese können zum Beispiel der Ladezustand der Batterie, die Kabinentemperatur oder die Temperatur des Antriebsstrangs sein. Dadurch kann die Vorhersagegenauigkeit für die Zielgröße(n) 7 weiter verbessert werden. Hierbei können zusätzlich externe Lademöglichkeiten berücksichtigt werden, z. B. bei der Vorhersage des Ladezustands der Batterie. Diese Kennfelder können laufend verbessert werden, indem die Verbrauchsergebnisse im Fahrbetrieb für bestimmte Strecken in die Kennfelder 11 übernommen werden. Dies entspricht einem selbstlernenden Vorgehen.

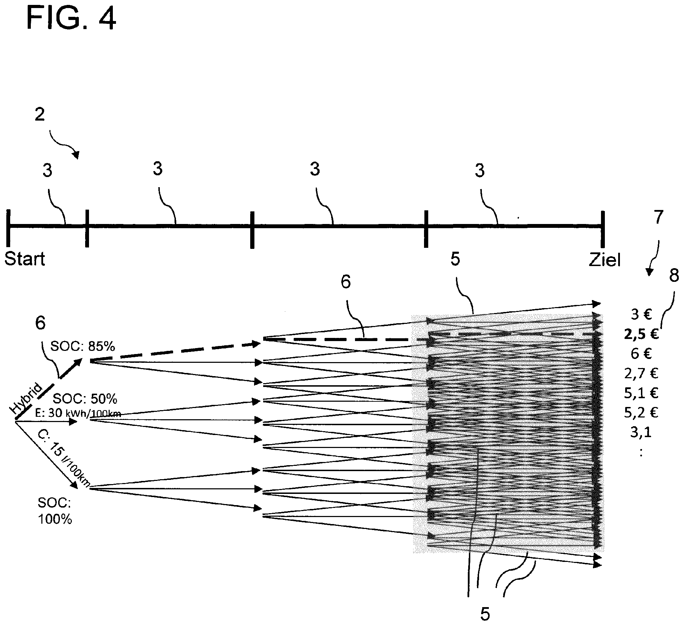

Im Schritt S50 wird anschließend für alle Pfade die sich aus dem Verbrauch für die einzelnen Streckenabschnitte ergebenden Gesamtfahrtkosten 7 berechnet. Dies ist in Figur 4 dargestellt. Die Figur 4 zeigt alle möglichen Pfade 5 entlang einer vorgegebenen Fahrtroute 2, wobei ein Pfad 5 eine Abfolge von Betriebsmodi 1 entlang der Fahrtroute 2 ist, derart, dass jedem Streckenabschnitt 3 einer der Betriebsmodi 1 zugeordnet ist. In dem vorliegenden Ausführungsbeispiel mit 3 unterschiedlichen Betriebsmodi ergeben sich somit für jeden Streckenabschnitt 3 Optionen für einen möglichen Betriebsmodus. Mit zunehmender Anzahl von Streckenabschnitten ergibt sich somit eine zunehmend verzweigende Baumstruktur, um alle kombinatorisch möglichen Abfolgen von Betriebsmodi 1 als jeweils einen Pfad 5 abzubilden. In Abhängigkeit des gewählten Betriebsmodus 1 ergeben sich unterschiedliche Energieverbräuche 4 und Ladezustände der Batterie, die für jeden Streckenabschnitt 3 in Abhängigkeit des Betriebsmodus 1 vorhergesagt werden.

Für jeden einzelnen dieser Pfade 5 kann ein Gesamtwert der Zielgröße 7 für die Fahrtroute 2 als Summe der Zielgrößen 4 für jeden einzelnen Streckenabschnitt 3 berechnet werden. Der optimale Pfad 6 ist derjenige mit dem Extremwert für die Zielgröße 7. Gemäß dem in Figur 4 gezeigten einfachen Beispiel mit nur einer Zielgröße, den Fahrtkosten, ist der optimale Pfad 6 derjenige mit dem kleinsten Wert 8 für die Fahrkosten. Der optimale Pfad 6 ist in Figur 4 mit einer dicken gestrichelten Linie dargestellt. Vorzugsweise erfolgt die Optimierung jedoch mittels einer multikriteriellen Optimierung, wie vorstehend beschrieben, unter Verwendung mehrerer Zielgrößen. Optional kann eine Empfehlung an den Fahrer ausgegeben werden, eine externe Lademöglichkeit auf der Fahrtroute zu nutzen.

Im Schritt S60 stellt dann das Betriebsverfahren den jeweiligen Betriebsmodus gemäß der ermittelten Abfolge von Betriebsmodi des optimalen Pfades für jeden Streckenabschnitt ein. Im Schritt S70 wird fortlaufend geprüft, ob das Fahrtziel erreicht wurde. Wenn ja, wird das Betriebsverfahren zur Auswahl der Betriebsmodi beendet. Wenn nein, werden im Schritt S80 die prädizierten Zwischenergebnisse für die bereits durchfahrenen Streckenabschnitte 3 durch tatsächliche Größen für die bereits befahrenen Streckenabschnitte 3 ersetzt. Hierfür werden die Zielgrößen für die bereits durchfahrenen Streckenabschnitte auf Basis der tatsächlichen Verbrauchsgrößen ermittelt. Für die bereits durchfahrenen Streckenabschnitte werden die prädizierten Zielgrößen durch die tatsächlichen Zielgrößen ersetzt. Anschließend kehrt das Betriebsverfahren zu Schritt S50 zurück, um auf Basis dieser aktualisierten Zielgrößen erneut eine Optimierungsberechnung zur Bestimmung des optimalen Pfades durchzuführen.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere kann die Anzahl der Betriebsmodi, Anzahl und Auswahl der verbrauchsrelevanten Größen, mittels derer die wenigstens eine Zielgröße prädiziert wird, in Abhängigkeit von den zur Verfügung stehenden Verbrauchsdaten, der Fahrzeugsensorik und der gewünschten Berechungsgenauigkeit angepasst werden. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Betriebsmodus Hybridantrieb
- 2: Fahrtroute
- 3: Streckenabschnitt
- 4: Energieverbrauch
- 5: Pfad
- 6: Optimaler Pfad
- 7: Wert für prädizierte Zielgröße, z. B. Fahrtkosten
- 8: Optimaler Wert für prädizierte Zielgröße, z. B. optimale Fahrtkosten
- 9: Geschwindigkeitsbegrenzung
- 10: Verbrauchsrelevante Größen
- 10a: Prädizierte verbrauchsrelevante Größen
- 11: Kennwerte/-linien/-felder

## Patentansprüche

1. Betriebsverfahren für einen Hybridantrieb eines Fahrzeugs, insbesondere eines Plug-In-Hybrid- oder Range-Extender-Fahrzeugs, der mit mehreren Betriebsmodi (1) zum Vorantreiben des Fahrzeugs betrieben werden kann, umfassend die folgenden Schritte:
a) Aufteilen einer Fahrtroute (2) in eine Abfolge von Streckenabschnitten (3);
b) Bestimmen des Werts wenigstens einer Zielgröße (4) für jeden der Betriebsmodi (1) des Hybridantriebs auf jedem Streckenabschnitt (3) entlang der Fahrtroute (2);
c) Bestimmen eines optimalen Pfades (6) für die Fahrtroute (2), wobei ein Pfad (5) eine Abfolge von Betriebsmodi (1) entlang der Fahrtroute (2) ist, derart, dass jedem Streckenabschnitt (3) ein Betriebsmodus (1) zugeordnet ist und der optimale Pfad (6) derjenige ist, der einen optimalen Wert (8) für die mindestens eine Zielgröße (4) aufweist;
**dadurch gekennzeichnet, dass** die Bestimmung des Werts der wenigstens einen Zielgröße in Abhängigkeit von wenigstens einer verbrauchsrelevanten Größe (10, 10a) erfolgt, umfassend eine fahrzeugspezifische Größe und/oder eine fahrzeugumgebungsspezifische Größe, wobei die wenigstens eine fahrzeugspezifische oder fahrzeugumgebungsspezifische Größe (10) umfasst: eine Fahrzeugmasse, eine Temperatur des Antriebsstranges, eine Temperatur der Batterie, eine Außentemperatur und/oder eine Innenraumtemperatur.

2. Verfahren nach Anspruch 1, **dadurch gekennzeichnet,**
- **dass** mehrere Zielgrößen für jeden der Betriebsmodi (1) des Hybridantriebs auf jedem Streckenabschnitt (3) entlang der Fahrtroute (2) bestimmt werden und
- **dass** der optimale Pfad (6) mittels einer multikriteriellen Optimierung auf Basis der mehreren Zielgrößen bestimmt wird.

3. Verfahren nach Anspruch 1 oder 2, **dadurch gekennzeichnet, dass** Fahrtkosten (7), ein Energieverbrauch, eine Fahrzeugemission, eine Lebensdauerbeanspruchung der Batterie und/oder eine Zeitdauer, die elektrisch gefahren wird, als die wenigstens eine oder die mehreren Zielgrößen bestimmt werden.

4. Verfahren nach einem der vorhergehenden Ansprüche, **dadurch gekennzeichnet, dass** die Bestimmung der wenigstens einen Zielgröße in Abhängigkeit von einer Zwangsbedingung erfolgt, wobei die Zwangsbedingung umfasst:
- die Vorgabe eines bestimmten Betriebsmodus für einen oder mehrere Streckenabschnitte; und/oder
- die Vorgabe eines bestimmten Schwellwerts, den ein Batterieladezustand am Ende der Fahrtroute unterschreiten oder überschreiten soll.

5. Verfahren nach einem der vorhergehenden Ansprüche, **dadurch gekennzeichnet, dass** das Fahrzeug ein Plug-In-Hybrid- oder Range-Extender-Fahrzeug ist und die Bestimmung der wenigstens einen Zielgröße in Abhängigkeit von externen Lademöglichkeiten für die Batterie entlang der Fahrtroute erfolgt.

6. Verfahren nach einem der vorhergehenden Ansprüche, **dadurch gekennzeichnet, dass** die Bestimmung der wenigstens einen Zielgröße in Abhängigkeit von wenigstens einer verbrauchsrelevanten Größe (10, 10a) erfolgt, nämlich einer Fahrgeschwindigkeitsverlauf.

7. Verfahren nach einem der vorhergehenden Ansprüche, **dadurch gekennzeichnet, dass** die wenigstens eine verbrauchsrelevante Größe (10a) für die Streckenabschnitte prädiziert wird.

8. Verfahren nach Anspruch 7, **dadurch gekennzeichnet, dass** der prädizierte Fahrgeschwindigkeitsverlauf in Abhängigkeit eines Streckentyps, einer Geschwindigkeitsbegrenzung (9), einem topographischen Verlauf der Fahrbahn und/oder einer Geschwindigkeit eines Verkehrflusses bestimmt wird.

9. Verfahren nach einem der vorhergehenden Ansprüche, **gekennzeichnet durch** den Schritt, dass nach erfolgter Durchfahrt eines oder mehrerer Streckenabschnitte (3) der tatsächliche Wert für die wenigstens eine Zielgröße für den bereits durchfahrenen einen oder die mehreren Streckenabschnitte bestimmt wird und die Bestimmung des optimalen Pfades erneut durchgeführt wird.

10. Verfahren nach einem der vorhergehenden Ansprüche, **dadurch gekennzeichnet, dass** die mehreren Betriebsmodi umfassen:
- einen rein elektrischen Betrieb, bei dem die Traktionsenergie ausschließlich durch die Batterie bereitgestellt wird;
- einen Hybridantrieb, bei dem das Fahrzeug vorwiegend mittels dem Verbrennungsmotor und Kraftstoff als Energiequelle betrieben wird und der Elektromotor der Effizienzsteigerung dient; und
- ein Laden der Batterie über den Verbrennungsmotor.

11. Verfahren nach einem der vorhergehenden Ansprüche 5 bis 9, **gekennzeichnet durch** das Ermitteln und Ausgeben von Haltepunkten entlang der optimalen Route zum Einkoppeln von regenerativem Strom **durch** externes Nachladen der Batterie an den ermittelten Haltepunkten.

12. Fahrzeug, insbesondere Nutzfahrzeug, mit einem Hybridantrieb, der mit einem Verfahren gemäß den vorstehenden Ansprüchen betrieben wird.

## Claims

1. An operating method for a hybrid drive of a vehicle, in particular a plug-in hybrid or a range-extender vehicle, which can be operated with multiple operating modes (1) for the propulsion of the vehicle, comprising the following steps:
a) dividing a travel route (2) into a series of sections (3);
b) determining the value of at least one target variable (4) for each of the operating modes (1) of the hybrid drive on each section (3) along the travel route (2);
c) determining an optimum path (6) for the travel route (2), wherein a path (5) is a series of operating modes (1) along the travel route (2) such that each section (3) is assigned an operating mode (1) and the optimum path (6) is the one that has an optimum value (8) for the at least one target variable (4); **characterized**
**in that** the determination of the value of the at least one target variable takes place in accordance with at least one consumption-relevant variable (10, 10a), comprising a vehicle-specific variable and/or a vehicle-environment-specific variable, wherein the at least one vehicle-specific or vehicle-environment-specific variable (10) comprises: a vehicle mass, a temperature of the drive train, a temperature of the battery, an outside temperature and/or an interior temperature.

2. The method according to Claim 1, **characterized**
- **in that** multiple target variables are determined for each of the operating modes (1) of the hybrid drive on each section (3) along the travel route (2) and
- **in that** the optimum path (6) is determined by means of a multicriterial optimization on the basis of the multiple target variables.

3. The method according to Claim 1 or 2, **characterized in that** travel costs (7), an energy consumption, a vehicle emission, demands on the service life of the battery and/or a time period in which the vehicle is driven electrically are determined as the at least one target variable or the multiple target variables.

4. The method according to one of the preceding claims, **characterized in that** the determination of the at least one target variable takes place in accordance with a constraint, wherein the constraint comprises:
- the prescription of a specific operating mode for one or more sections; and/or
- the prescription of a specific threshold value that the state of charge of the battery should not go below or above at the end of the travel route.

5. The method according to one of the preceding claims, **characterized in that** the vehicle is a plug-in hybrid or range-extender vehicle and the determination of the at least one target variable takes place in accordance with external charging possibilities for the battery along the travel route.

6. The method according to one of the preceding claims, **characterized in that** the determination of the at least one target variable takes place in accordance with at least one consumption-relevant variable (10, 10a), to be specific a travelling speed profile.

7. The method according to one of the preceding claims, **characterized in that** the at least one consumption-relevant variable (10a) is predicted for the sections.

8. The method according to Claim 7, **characterized in that** the predicted travelling speed profile is determined in accordance with a section type, a speed limitation (9), a topographical profile of the roadway and/or a speed of a traffic flow.

9. The method according to one of the preceding claims, **characterized by** the step that, after passing through one or more sections (3), the actual value for the at least one target variable for the one or more sections already passed through is determined and the determination of the optimum path is carried out once again.

10. The method according to one of the preceding claims, **characterized in that** the multiple operating modes comprise:
- purely electrical operation, in which the traction energy is provided exclusively by the battery;
- hybrid operation, in which the vehicle is predominantly operated by means of the internal combustion engine and fuel as the energy source and the electric motor serves for increasing efficiency; and
- charging of the battery by way of the internal combustion engine.

11. The method according to one of the preceding Claims 5 to 9, **characterized by** ascertaining and outputting stopping points along the optimum route for coupling in regenerative power by external recharging of the battery at the stopping points ascertained.

12. A vehicle, in particular a commercial vehicle, with a hybrid drive that is operated by a method according to the preceding claims.

## Revendications

1. Procédé de fonctionnement pour un entraînement hybride d'un véhicule, en particulier d'un véhicule hybride rechargeable ou à prolongateur d'autonomie, qui peut fonctionner en plusieurs modes de fonctionnement (1) permettant de propulser le véhicule, comprenant les étapes suivantes consistant à :
a) diviser un itinéraire (2) en une séquence de tronçons de route (3) ;
b) déterminer la valeur d'au moins une grandeur cible (4) pour chacun des modes de fonctionnement (1) de l'entraînement hybride sur chaque tronçon de route (3) le long de l'itinéraire (2) ;
c) déterminer un trajet optimal (6) pour l'itinéraire (2), un trajet (5) étant une séquence de modes de fonctionnement (1) le long de l'itinéraire (2) de telle sorte que chaque tronçon de route (3) est respectivement associé à un mode de fonctionnement (1), et le trajet optimal (6) est celui qui présente une valeur optimale (8) pour ladite au moins une grandeur cible (4) ;
**caractérisé en ce que** la détermination de la valeur de ladite au moins une grandeur cible est effectuée en fonction d'au moins une grandeur (10, 10a) liée à la consommation, comprenant une grandeur spécifique au véhicule et/ou une grandeur spécifique à l'environnement du véhicule, ladite au moins une grandeur spécifique au véhicule ou spécifique à l'environnement du véhicule (10) comprenant : une masse du véhicule, une température de la chaîne cinématique, une température de la batterie, une température extérieure et/ou une température de l'habitacle.

2. Procédé selon la revendication 1, **caractérisé**
- **en ce que** plusieurs grandeurs cibles sont déterminées pour chacun des modes de fonctionnement (1) de l'entraînement hybride sur chaque tronçon de route (3) le long de l'itinéraire (2), et
- **en ce que** le trajet optimal (6) est déterminé au moyen d'une optimisation selon plusieurs critères sur la base de plusieurs grandeurs cibles.

3. Procédé selon la revendication 1 ou 2, **caractérisé en ce que** des frais de déplacement (7), une consommation d'énergie, des émissions du véhicule, une sollicitation de durée de vie de la batterie et/ou une durée de conduite électrique sont déterminées comme ladite au moins une ou les plusieurs grandeurs cibles.

4. Procédé selon l'une quelconque des revendications précédentes, **caractérisé en ce que** la détermination de ladite au moins une grandeur cible est effectuée en fonction d'une contrainte, la contrainte comprenant :
- la spécification d'un mode de fonctionnement déterminé pour un ou plusieurs tronçons de route ; et/ou
- la spécification d'une valeur seuil déterminée qu'un état de charge de batterie doit soupasser ou dépasser à la fin de l'itinéraire.

5. Procédé selon l'une quelconque des revendications précédentes, **caractérisé en ce que** le véhicule est un véhicule hybride rechargeable ou à prolongateur d'autonomie, et la détermination de ladite au moins une grandeur cible est effectuée en fonction des possibilités de chargement externes pour la batterie le long de l'itinéraire.

6. Procédé selon l'une quelconque des revendications précédentes, **caractérisé en ce que** la détermination de ladite au moins une grandeur cible est effectuée en fonction d'au moins une grandeur (10, 10a) liée à la consommation, notamment à une courbe de vitesse de déplacement.

7. Procédé selon l'une quelconque des revendications précédentes, **caractérisé en ce que** ladite au moins une grandeur (10a) liée à la consommation est prédite pour les tronçons de route.

8. Procédé selon la revendication 7, **caractérisé en ce que** la courbe de vitesse de déplacement prédite est déterminée en fonction d'un type de route, d'une limitation de vitesse (9), d'une allure topographique de la chaussée et/ou d'une vitesse d'un flux de circulation.

9. Procédé selon l'une quelconque des revendications précédentes, **caractérisé par** l'étape consistant à ce qu'après un passage effectué par un ou plusieurs tronçons de route (3), la valeur réelle pour ladite au moins une grandeur cible est déterminée pour ledit un ou les plusieurs tronçons de route déjà parcourus, et la détermination du trajet optimal est effectuée à nouveau.

10. Procédé selon l'une quelconque des revendications précédentes, **caractérisé en ce que** les plusieurs modes de fonctionnement comprennent :
- un fonctionnement purement électrique dans lequel l'énergie de traction est fournie exclusivement par la batterie ;
- un entraînement hybride dans lequel le véhicule est actionné principalement au moyen du moteur à combustion interne et du carburant comme source d'énergie, et le moteur électrique sert à augmenter le rendement ; et
- un chargement de la batterie par l'intermédiaire du moteur à combustion interne.

11. Procédé selon l'une quelconque des revendications précédentes 5 à 9, **caractérisé par** l'établissement et la sortie de points d'arrêt le long du trajet optimal pour injecter du courant régénératif par une recharge externe de la batterie aux points d'arrêt établis.

12. Véhicule, en particulier véhicule utilitaire, comprenant un entraînement hybride qui fonctionne avec un procédé selon les revendications précédentes.
